# EUROPEAN PATENT SPECIFICATION

(11) **EP 0 663 518 B1**
(45) Date of publication and mention of the grant of the patent: **12.05.1999**
(21) Application number: 94120847.2
(22) Date of filing: 28.12.1994
(51) Int. Cl.: F02B 75/22, F02F 1/24

(54) **Internal combustion engine**
Brennkraftmaschine
Moteur à combustion interne

(30) Priority: 29.12.1993 JP 353188/93
(43) Date of publication of application: 19.07.1995
(73) Proprietor: YAMAHA HATSUDOKI KABUSHIKI KAISHA, Iwata-shi Shizuoka-ken, 438 (JP)
(72) Inventor: Aoyama, Tateo, Iwata-shi, Shizuoka-ken 438 (JP); Uchida, Masahiro, Iwata-shi, Shizuoka-ken 438 (JP)
(74) Representative: Grünecker, Kinkeldey, Stockmair & Schwanhäusser Anwaltssozietät

(56) References cited:
- EP-A- 0 408 080
- GB-A- 2 133 834
- US-A- 4 809 663
- US-A- 5 094 193

## Description

This invention concems an intemal combustion engine comprising a cylinder block with at least one cylinder bore defined therein, a cylinder head affixed to said cylinder block through a plurality of head bolts and enclosing said cylinder bore, an intake passage arrangement and an exhaust passage arrangement including a plurality of exhaust valves and a plurality of intake valves, said intake valves and exhaust valves being actuated by an intake camshaft and exhaust camshaft via valve lifters which are slidably received in lifter guide holes formed in lifter guide walls, and a spark plug hole wall defining a spark plug hole for inserting a spark plug therein, formed in said cylinder head, whereby the lifter guide walls are integrally connected to the spark plug hole wall and to the side wall.

Said intemal combustion engine is disclosed in GB-A-2 133 834.

Moreover in conventional multi-cylinder engines with three air intake valves, the structure of the lifter guide wall and plug-hole wall area was such illustratively that the three lifter guide walls would be formed as a unit, and the central lifter guide wall would normally adjoin, as a single unit, the plug-hole wall. With such a cylinder head, in order to fabricate flat combustion chambers with low surface area/volume ratios (S/V ratio), it was necessary to decrease the angle formed by the intake and exhaust valves relative to the axis of the cylinders. This decreasing of the valve pitch angle required increased cylinder head height.

However, in the above described cylinder head structure, a relatively large space lies below the foregoing lifter guide holes through which the cam chamber passes, and when the height of the cylinder head has to be increased as described above, the foregoing space increases by the same amount, which results in the lowering of the rigidity in the area around the lifter guide walls. Increased noise results when the rigidity in the area of these lifter guide walls declines.

In principle, the same applies to the internal combustion engine according to GB 2 133 834.

Also, in the prior art when cylinder heads were shortened in the axial direction of the crankshaft as a means to make them more compact, less space was available for the head bolt holes, which were positioned in the area around the cylinders in the axial direction of the crankshaft, and in some cases the inside the foregoing lift guide wall of the adjacent cylinder was hidden by a part of the seat surface for said bolt hole as seen in the axial direction of the bolt hole. In such cases, the seat surface had to be formed by boring, thereby adversely affecting ease of fabrication and the head bolt installation operation.

Accordingly it is an objective of the present invention to provide an improved internal combustion engine which allows a flat combustion chamber with low S/V ratios and a compact cylinder head structure, while at the same time increasing the rigidity of the cylinder head in the area around the lifter guides to inhibit noise.

According to the present invention, the afore-mentioned objective is performed in that the lifter guide walls are connected to the spark plug hole wall via a laterally extending reinforcing rib and to the side wall via a vertically extending reinforcing rib.

Thus, the lifter guide walls and the spark plug hole wall form a rigid integral unit even when using small valve pitch angles and high cylinder heads, so that noise radiating from the area of the lifter guide walls can be reduced.

According to a preferred embodiment of the invention, the cylinder head is affixed to the cylinder block through at least four head bolts per cylinder, said head bolts defining a rectangular area within which the lifter guide walls and the spark plug hole wall are disposed.

According to another preferred embodiment of the invention, camshaft bearings having bearing surfaces for rotatably supporting respective bearing surfaces of the intake camshaft are formed in the cylinder head between a center lifter guide wall for a center intake valve and side lifter guide walls for side intake valves, said camshaft bearing connecting the lifter guide walls with the spark plug hole wall. Thus, the rigidity of the lifter guide walls can be further increased and on the other hand, the camshaft can rotate smoothly.

According to a further preferred embodiment of the invention, the camshaft bearings for the intake camshaft and the exhaust camshaft are provided with bolt holes for attaching bearing caps, wherein the bolt holes disposed inwardly of the intake and exhaust camshafts are located substantially on a circle lying concentric with the spark plug hole near the outside of the spark plug hole wall. Accordingly an adequate sealing surface area for the plug holes is secured while making the size of the lifter guide wall and spark plug hole wall unit more compact, thereby enabling overall reduction of the engine size.

According to yet another preferred embodiment of the invention, the lifter guide hole for the center intake valve has a smaller diameter than the lifter guide hole for the side intake valves. Thus, the dimensions between the lifter guide walls of adjacent units of a multi-cylinder engine can be increased and further, the seating surfaces of head bolt holes for the head bolts of the air intake side of the cylinder head can be disposed on the outside so that they do not overlap the adjacent cylinders lifter guide walls as viewed in the axial direction of the head bolt holes.

Further preferred embodiments of the present invention are laid down in further dependent claims.

Hereinafter the present invention is illustrated and explained in greater detail by means of a preferred embodiment thereof in conjunction with accompanying drawings, wherein:
Fig. 1 is a front view of an engine of the V-type having a cylinder head supporting a plurality of intake and exhaust valves per cylinder according to a preferred embodiment of the invention;
Fig. 2 is a front sectional view of the cylinders and an air intake system disposed between the cylinders arranged in a V according to the embodiment of fig. 1;
Fig. 3 is a top view of the air intake system according to the foregoing embodiment of the invention;
Fig. 4 is a top view along line IV-IV in fig. 2 of the air intake system with the air intake passage blocks removed according to the foregoing embodiment of the invention;
Fig. 5 is a partial sectional bottom view of the air intake system according to the foregoing embodiment of the invention;
Fig. 6 is a partial sectional side view of the air intake system according to the foregoing embodiment of the invention;
Fig. 7 is an enlarged cross-sectional view of a tumble valve disposed in an intake passage of the air intake system according to the foregoing embodiment of the invention;
Fig. 8 is a top view of the cylinder head of the engine according to the embodiment of the preceding figs.;
Fig. 9 is a top view similar to the view of fig. 7 of the cylinder head with the camshafts removed according to an embodiment of the engine according to the preceding figs. 1 to 8;
Fig. 10 is an enlarged top view of the principal parts of the cylinder head of the engine according to the foregoing embodiment;
Fig. 11 is a diagrammatic enlarged view of the principal parts of the cylinder head according to the foregoing embodiment of the invention;
Fig. 12 is a sectional view of the cylinder head along line XII-XII in fig. 2 according to the foregoing embodiment of the invention;
Fig. 13 is a sectional view of the cylinder head including the camshafts and the head cover affixed to the cylinder head along line XIII-XIII of fig. 2 according to the embodiment of the invention of the foregoing figs.;
Fig. 14 is a sectional view of the cylinder head along line XIV-XIV in fig. 2;
Fig. 15 is a sectional view of the cylinder head including two camshafts and the head cover affixed to the cylinder head along line XV-XV in fig. 2;
Fig. 16 is a sectional view of the cylinder head including a spark plug and a center intake valve along line XVI-XVI in fig. 2 according to the embodiment of the invention of the foregoing figs.;
Fig. 17 is a sectional view of the cylinder head along line XVII-XVII in fig. 2; and
Fig. 18 is a bottom view of the cylinder head of the foregoing embodiment of the invention.

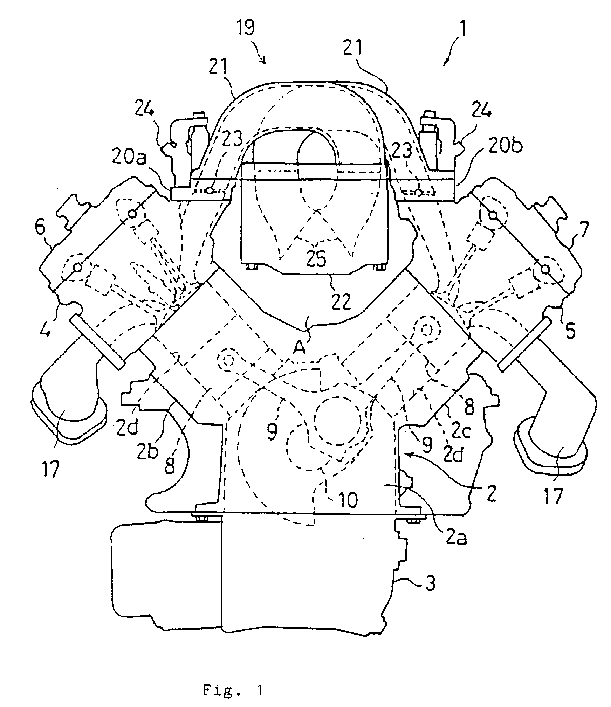

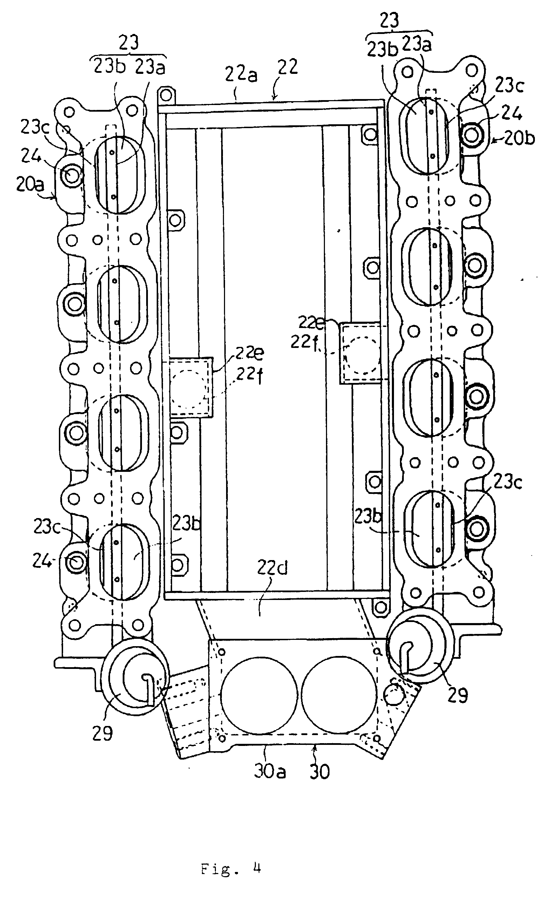

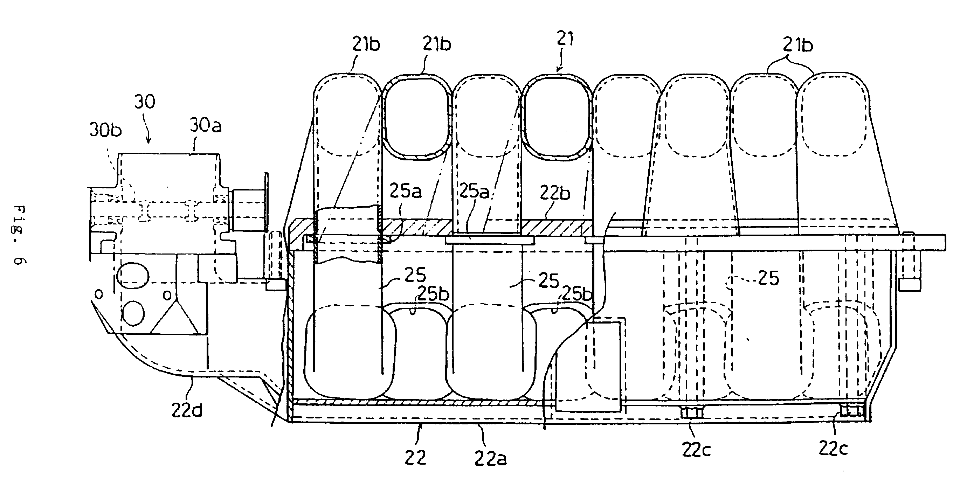

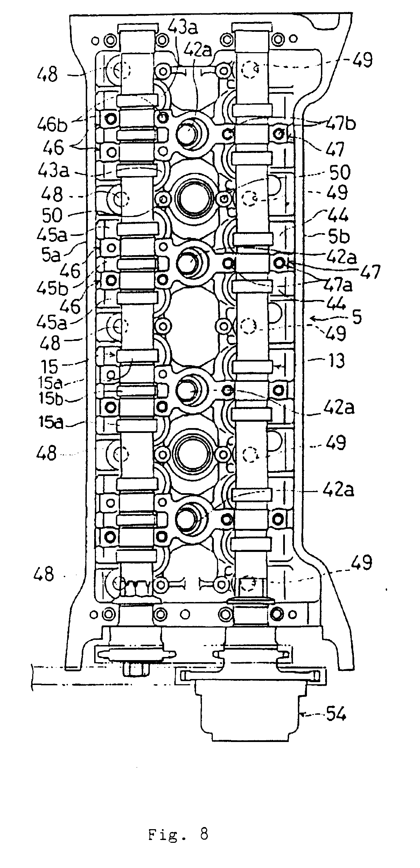

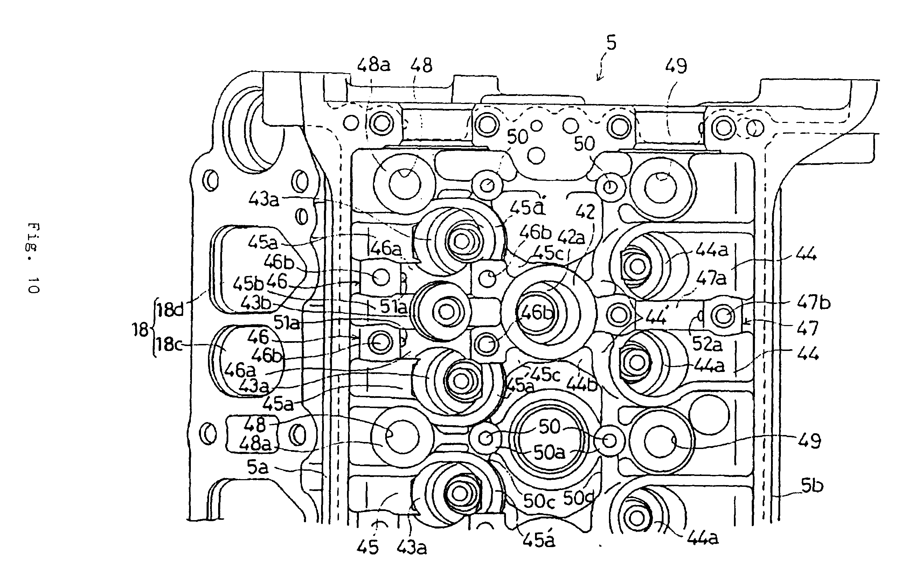

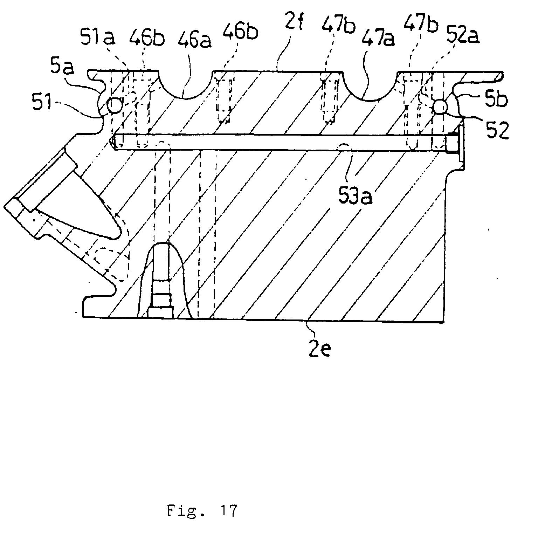

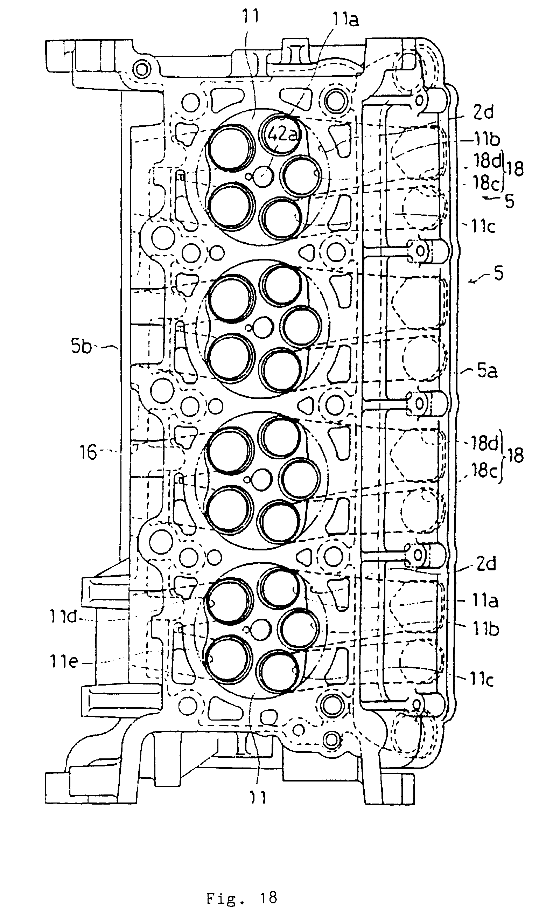

Figures 1 through 18 will be used to describe an embodiment of this invention incorporated into a V-type multi-cylinder engine.

In the figures, 1 represents a water cooled, four-cycle V-8 engine including an oil pan 3 which forms the lower part of the crank chamber and attaches on the underside mating surface of skirt area 2a formed on the bottom of the cylinder block 2, which itself comprises the top part of the crank chamber. On the mating surfaces 2b, 2c of the left and right cylinder units of the V bank of the foregoing cylinder block 2 are mounted left and right cylinder heads 4, 5 which are secured by head bolts. Left and right head covers 6, 7 are in turn attached to the top left and right mating surfaces of said left and right cylinder heads 4, 5. In the present engine embodiment, the left and right cylinder units 2b, 2c, the left and right cylinder heads 4, 5, the left and right head covers 6,7 as well as their internal mechanical structures are left-right symmetrical, so the explanation below and areas shown in the figures are equally applicable to both the left and right sides.

Each of the foregoing cylinder units 2b, 2c contain four cylinder bores 2d aligned in a row with pistons 8 slidably inserted into said cylinder bores 2d, and connected to the crankshaft 10 by means of connecting rods 9.

Also, four concave combustion areas 11 have been formed in each of the foregoing left and right cylinder heads 4, 5, on the surfaces 4a, 5a that mate with the block. Formed in said concave combustion areas 11 are three air intake openings 11a - 11c and two exhaust openings 11d, 11e. Spark plugs 41 have also been inserted in the center areas of the foregoing concave combustion areas 11.

The foregoing exhaust openings 11d, 11e are opened and closed by exhaust valves 12, that are driven open and closed by the exhaust camshaft 13 including exhaust lifters 13a. Additionally, the foregoing air intake openings 11a, 11b, 11c are opened and closed by respective air intake valves 14a, 14b, 14a, that are driven open and closed by an air intake camshaft 15 through air intake lifters 15a, 15b, 15a. Attached to the end of the foregoing exhaust camshaft 13 that projects to the outside is a valve timing adjustment mechanism 54 which allows the variable control of the timing of the opening and closing of the valves. The structure of the various lifter guides and the spark plug disposition will be described below.

The foregoing exhaust valve openings 11d, 11e lead respectively to the outside wall 5b of the cylinder heads 4, 5 by means of a single exhaust port 16. Each of these exhaust ports 16 connects to the exhaust manifold 17 at their respective outside connection openings 16a.

The foregoing air intake openings 11a-11c lead to the outside of the inside bank walls 5a of the cylinder heads 4, 5 by means of air intake ports 18. These air intake ports 18 are connected to an air intake unit 19 at outside connection openings 18a. This air intake unit 19 is shaped in such manner that it can occupy the space in the V between the foregoing left and right cylinder units 2b, 2c, the left and right cylinder heads 4, 5, and the left and right head covers 6,7. The foregoing air intake unit 19 includes left and right valve bodies 20a, 20b, which connect to the above mentioned outside connection openings 18a; air intake passage blocks 21, 21, which are configured in an arc spanning both of said valve bodies 20a, 20b; and of a surge tank 22 suspended from the bottom side of said air intake passage blocks 21, 21.

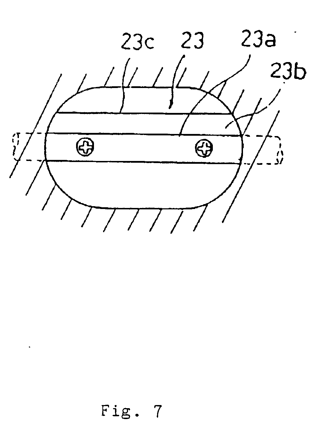

The connecting surfaces of the foregoing external connection openings 18a of the left and right cylinder heads 4, 5 are contiguous with the openings and are parallel to the crank shaft. The foregoing valve bodies 20a, 20b are flat panel-shaped aluminum alloy castings. Positioned inside these left and right valve bodies 20a, 20b are a single valve shaft 23a that runs parallel to the crankshaft 10, and ON-OFF tumble valves 23 for each cylinder with a valve plate 23b affixed to them. When the foregoing valve plates 23b have been rotated into their fully closed position, notch 23c is formed on the outside of the foregoing V-bank (see Figure 7). Accordingly said valve plate 23b closes the air intake port 18 whereby the intake air is directed toward the top 18b of the air intake port 18, and from there, is introduced directionally in the axial direction into the cylinder from the center of that cylinder. The axial inflow into the cylinder facilitates the generation of a vertical swirl (tumble) inside the cylinder.

The above mentioned valve bodies 20a, and 20b also comprise fuel injection valves mounted approximately vertically, one for each cylinder. When viewed from the top, the fuel injection valves 24 are positioned on approximately the center line of the air intake port 18, and their fuel injection nozzles are directed - toward the foregoing various air intake openings 11a - 11c.

The structure described below has also been incorporated into this embodiment to further reinforce the above mentioned tumble (swirl) generation. The axial line P for the spark plug 41 has been tilted toward the outside bank at angle θ3 with respect to the cylinder axis H. Correspondingly, the air intake valves 14a, 14b are closer to the vertical cylinder axis H than the exhaust valves 12, and the air intake port 18 is even more vertical in order to secure the necessary space for its location. Thus, the angle set on the foregoing air intake valves is such that the angles θ1, θ2 of air intake valves 14b, 14a relative to the cylinder axis line H are smaller than the angle θ4 of the exhaust valves 12 relative to the cylinder axis H, whereby, compared with the distance L1 from the cylinder axis H to the exhaust camshaft 13, the distance L2 to the air intake camshaft is shorter. Also the air intake port 18 is as upright as possible with respect to the cylinder axis line 8, and further the notches 23c in the above described ON-OFF tumble valves 23 are positioned on the upper side 18b of the valve.

When the foregoing ON-OFF tumble valve 23 is closed, the above described structure causes the intake air flow to be directed toward the upper side 18b and to be directed even more strongly along the axial line H from the center area of the cylinder, thereby assuring a tumbling action. In addition, the above mentioned fuel injection valves 24 inject the fuel so that it will intersect with the above described diverted air flow, thereby achieving a good mixture of air and fuel.

The above mentioned surge tank is an approximately square box with the tank unit 22a being composed of a lid (ceiling) 22b, which closes the rectangular opening at the top, and this assembly is held together by bolts 22c inserted from the bottom side. The top surface of the above mentioned lid 22b is flat and smooth. The bottom wall of the foregoing surge tank 22 is welded in place along the edges, but it would also be possible to use a removable design. A pair of concave members 22e on the left and right inside the surge tank are positioned so that they merge near the back of the tank, and a knock sensor 22f is mounted in this concave area to detect knocking. Thus, the space inside the surge take 22 has been expanded to accommodate the knock sensor, the positioning of which therefore poses no restrictions upon the surge tank in this design.

The above mentioned air intake passage blocks 21 is a set of two parts, one part servicing the cylinders on one side, and the other part servicing the cylinders on the other side. One end of approximately U-shaped air intake pipes 21b, one for each cylinder, is welded to the flange 21a affixed to the foregoing valve bodies 20a, 20b. It would of course be possible as well to fabricate the foregoing flange and air intake pipes as a single casting. Also, while it would be additionally possible to fabricate the above mentioned valve bodies 20a, 20b and the above mentioned air intake passage blocks 21 as single units, in this embodiment the separate making of the valve bodies and the air intake passage blocks 21 simplifies casting.

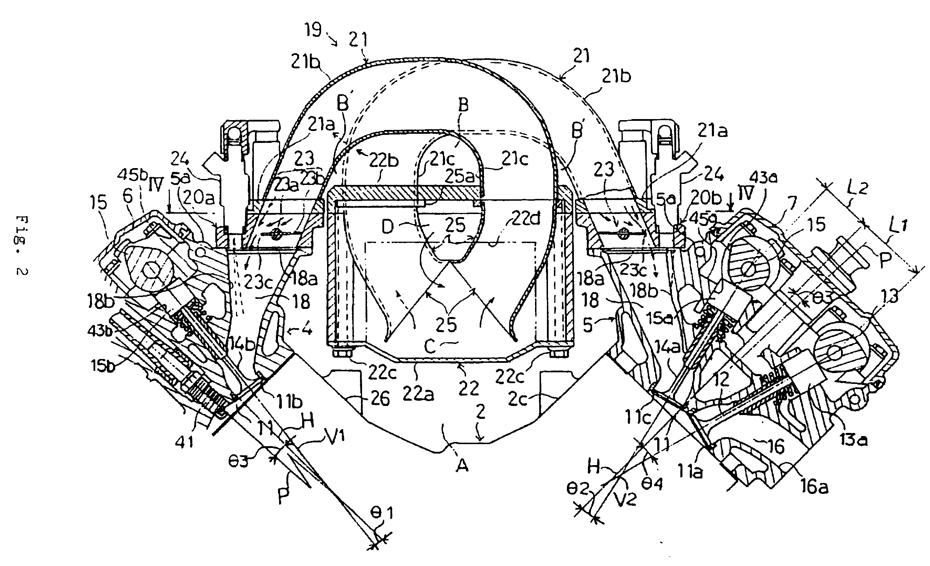

The other ends 21c of the foregoing various air intake pipes 21b have been inserted into and welded into the lid 22b of the foregoing surge tank 22 in such manner that they are directed toward their respective cylinders. Accordingly, the foregoing two air intake passage blocks 21, 22 are made integral into a single block by the foregoing lid 22b. Also, as shown in Figure 2, the other ends 21c of the above mentioned air intake pipes for the cylinders on either side jointly with the foregoing lid unit 22b form the outside airflow passage B which extends parallel to the crankshaft. This outside airflow passage B connects with the outside space, extending in the crankshaft direction, causing the outside air to flow through said passage B in the crankshaft direction.

Here, not only does the foregoing outside airflow passage B extend in the crankshaft direction, but it also communicates with outside air from above that flows through the gap spaces B' between the adjacent air intake pipes 21b. Figure 2 shows almost no gap between the air intake pipes 21b just above the outside airflow passage B, however, the closer to the B' side, the more the two air intake pipes divert upward and downward, and to the left and right of each other, creating bigger gaps. Also, since the top surface of the lid 22b, which forms the bottom surface of the foregoing outside airflow passage B, is smooth and flat, the cross-sectional area of the foregoing outside airflow passage being greater than it would be if said top surface were arc-shaped. This arrangement allows for better release of hot air inside the V-bank to the outside.

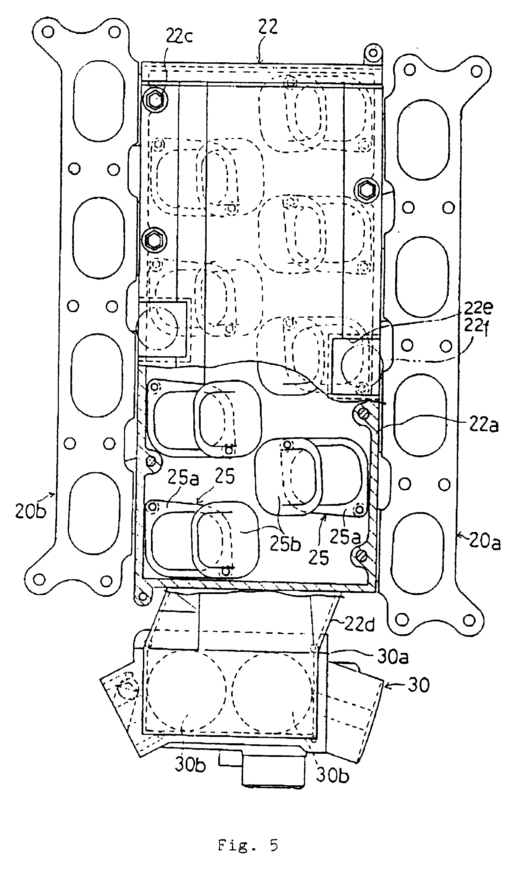

In addition, the various extension pipes 25 from the cylinders are fastened by bolts to a flange 25a on the inside surface of the foregoing lid 22. Said extension pipes 25 are positioned so that they share the same axis with the other ends 21c of the foregoing various air intake pipes 21b, and they pass into said air intake pipes 21b. In addition, the foregoing various extension pipes 25 comprise openings 25b arrayed in a zig-zag fashion at roughly the center of the surge tank 22 (see Figure 5). Inside this surge tank 22, the air flow in the axial direction of the crankshaft is primarily into the space C between the openings 25 of the foregoing left and right extension pipes, and into the space D formed between the left and right extension pipes 25.

An air introduction opening 22d is additionally formed in one end as seen in the axial direction of the crankshaft (the front end in Figure 2) of the foregoing surge tank 22. Said air introduction opening 22d, is connected to a throttle valve 30 consisting of a pair of valve plates 30a which are free to rotate on parallel shafts inside the throttle body 30b. The air flowing through this throttle valve 30 through the air introduction opening 22c passes through the surge tank primarily into the space C in the area of the openings 25b of the foregoing extension pipes 25 and through upper space D as said air flows in the axial direction with respect to the crankshaft. It is introduced into the cylinders from the various extension pipes 25 through the air intake pipes 21b.

The actuator for the foregoing ON-OFF tumble valve 23 located at the protruding end of the valve shaft 23a is an arm which connects said actuator with the output shaft 29a of a diaphragm valve 29. The foregoing diaphragm valve 29 is supported on valve bodies 20a, and 20b by the same stock that supports the foregoing ON-OFF tumble valves 23. This eliminates any possibility for assembly error in the tolerances between the various switching valves and the diaphragm valve, thereby assuring their smooth opening and closing.

A throttle valve 30 is positioned within the relatively broad space between the diaphragm valves 29, 29 used by the foregoing left and right ON-OFF tumble valves 23. Because this throttle valve is set in the middle of the V-bank, the inlet passage need not be curved and thereby the incoming air resistance is decreased.

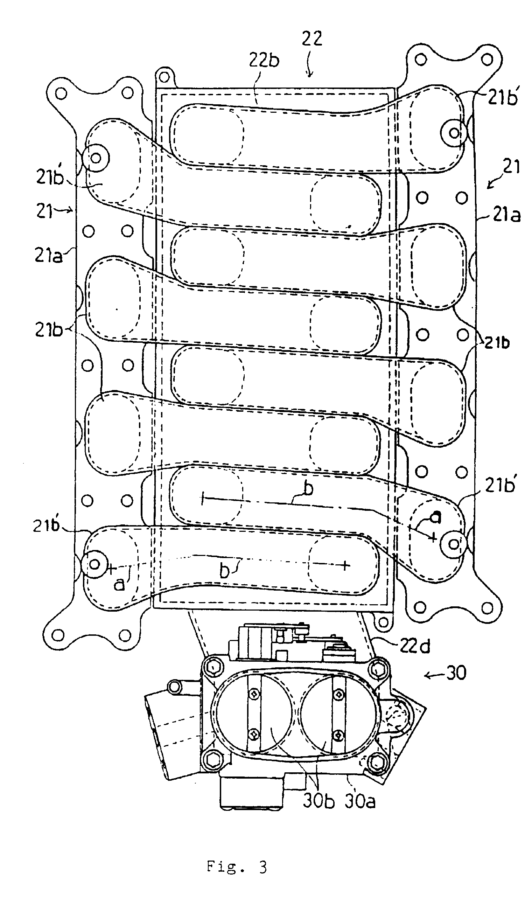

Here, as shown in the top view of Figure 3, among the various air intake pipes 21b described above, the four air intake pipes 21b' located at opposed ends relative to the crankshaft are fitted with a riser area which, after bending inward in the crankshaft direction (see axial line a), extend straight approximately perpendicularly to the crankshaft (see axial line b). To wit, in this embodiment, the foregoing bends allow all the air intake pipes 21b to be arrayed towards the inside towards the crankshaft axis, so that all of the straight areas of the air intake pipes 21b are positioned within the vertically projected area of the surge tank 22. This structures allows a more compact air intake system, and further allows the positioning of the throttle valve 30 in close proximity to the surge tank 22 without interference from the air intake pipes 21b, thereby improving the response characteristics of the throttle.

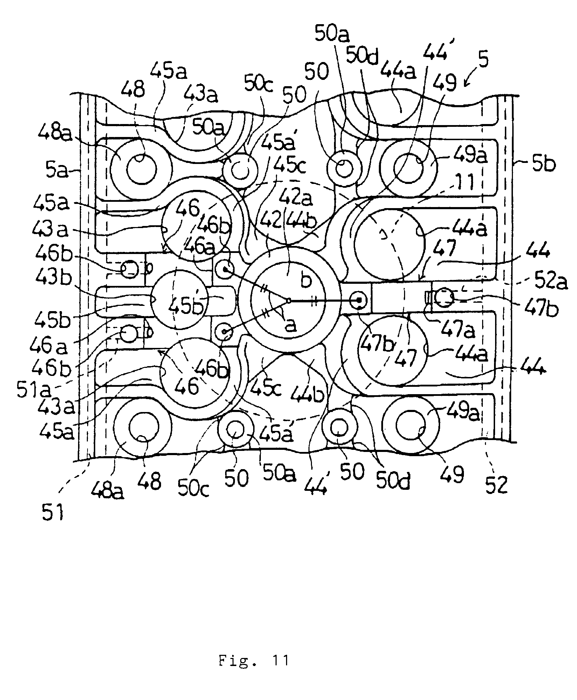

As is shown by the diagram in Figure 11, for all cylinders in this embodiment, the structure inside the square area of the cylinder head 5 that encompasses the head bolt holes 48, 48 on the air intake port side and head bolt holes 49, 49 on the exhaust port side is simple and approximately the same; in other words, the structure has been made into one unit for each cylinder. The head bolt holes 48, 48 on the air intake side are positioned on a line that is parallel to the axial line of the intake camshaft, and the head bolt holes 49, 49 on the foregoing exhaust port side are positioned on a line that is parallel to the axial line of the exhaust camshaft.

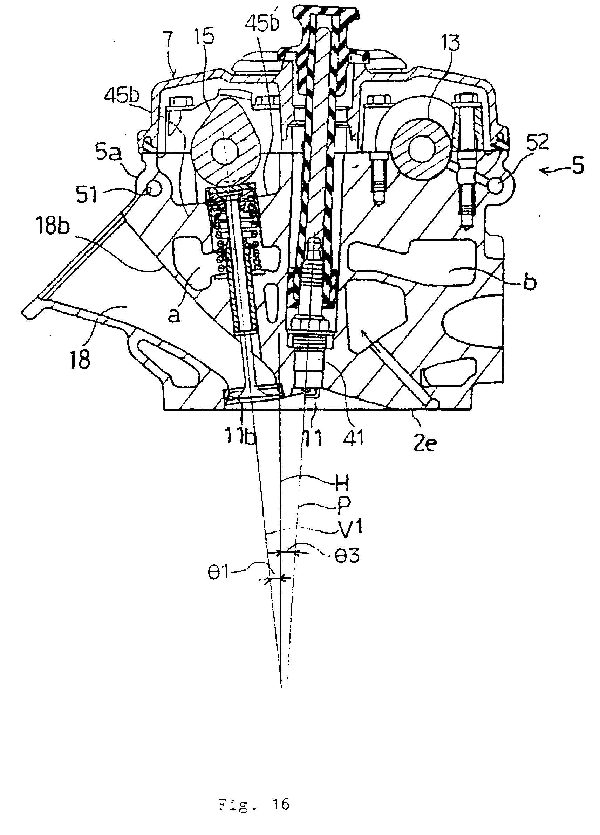

Each of the above mentioned units evinces the following configuration: A plug hole 42a for the insertion of the spark plug 41 is provided at the center of each of the cylinders. The bottom end of the plug hole 42a opens into the center of the combustion concave area 11. The plug-hole wall 42 surrounds the plug hole 42a, and, as shown in Figure 16, the surface of this wall continues without interruption from the mating surface 2f on the cover side of said cylinder head 5 to the combustion concave area 11 on the cylinder block mating surface 2e side.

The lifters 15a, 15b, 15a for the foregoing air intake valves 14a, 14b, 14a, and the lifters 13a, 13a for the foregoing exhaust valves 12, 12 have been inserted in freely sliding manner respectively into the air intake lifter guide-holes 43a, 43b, 43a and into the exhaust lifter guide-holes 44a, 44a present in the area surrounding the plug hole 42a in the foregoing cylinder head 5. Here, the center lifter guide hole 43b is of a smaller diameter than the lifter guide holes 43a on either side. Also, the center cam nose 15b on the air intake camshaft 15 is thinner (in the shaft's axial direction) than the cam nose areas 15a, 15a. As described below, it is possible thereby to decrease the space required for the lifter guide hole and to shrink the axial length of the crankshaft. The effective surface of the camshaft bearings 46a is also increased as a result.

Also, as shown primarily by Figure 16, the lifter guide wall 45b around the foregoing center lifter guide hole 43b is formed a step below the mating surface 2f for the head cover, in order to provide a relatively large space *a* formed between the said lifter guide wall 45b and air intake port ceiling 18b. Furthermore, the edge of the foregoing center lifter guide wall 45b on the inside bank side is one unit (integral) with the inside wall of the cylinder head 5, while the edge area 45b' on the side of the center of the cylinder is one unit (integral) with the foregoing plug-hole wall 42 over its entire height.

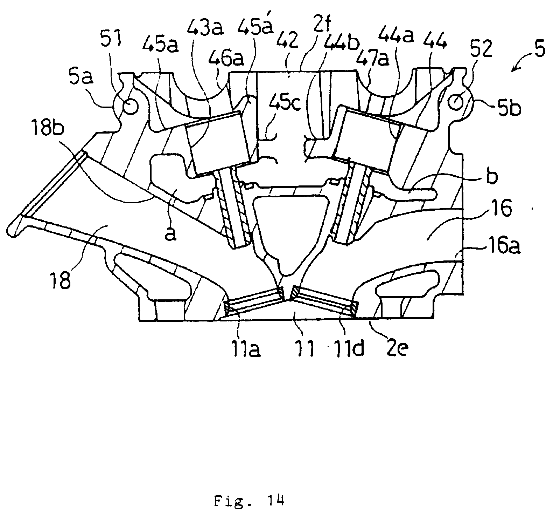

On one hand, as primarily shown by Figure 14, the lifter guide wall 45a, comprising the circumference of the lifter guide-holes 43a for the two side air intake valves 14a, is also designed to be one step down (recessed) from the cover mating surface 2f; and just as is the case for the center lifter guide wall 45b, the edge of said lifter guide wall 45a nearest the inside of the bank is one unit (integral) with the foregoing inside wall 5a. On the other hand, the side 45a' that is nearest the cylinder axis is distanced from the plug-hole wall 42 in the axial direction of the camshaft, and in this embodiment, in order to improve the rigidity of the foregoing lifter guide walls 45a on either side, a reinforcing rib 45c and the cam bearing surface 46 have been integrally formed with the plug-hole wall 42 on the foregoing lateral area 45a nearest the cylinder axis. Additionally, the center lifter guide wall 45b is one unit with the lifter guide walls 45a on either side.

In addition, as shown in Figures 16 and 14, the lifter guide wall 44 which comprises the exhaust side lifter guide holes 44a is designed to be a step below the mating surface 2f for the foregoing head cover, and below that, a space *b* accommodates the passage of the foregoing cam chamber. Also, the foregoing lifter guide wall 44 is integrally connected with the outside wall 5b of said cylinder head 5 on the side outside the bank, and on the lateral area 44' nearest the cylinder axis, a rib 44b joins the lifter guide wall 44 to the plug-hole wall 42.

A pair of air intake cam bearing surfaces 46 are present between the foregoing central lifter guide wall 45b and the lifter guides 45a on either side in cylinder 5. These camshaft bearings 46 are semi-circular and comprise bolt holes 46b that attach a bearing cap (not shown) over the top to hold the shaft bearings 46a in place. In addition, an exhaust shaft bearing 47 is situated between the foregoing exhaust lifter guide walls 44, 44 at a position opposite the foregoing central lifter guide hole. This exhaust shaft bearing 47 includes a semi-circular bearing surface 47a and bolt holes 47b.

Here, if the cylinder head 5 is viewed from above its cover-side surface 2f, the centers of the bolt holes 46b on the cylinder center side of the foregoing air intake camshaft bearings 46, 46, and the centers of the bolt holes 47b nearest the cylinder center for the exhaust camshaft bearings 47 are located on a circle concentric with the plug hole 42a, and moreover, they are just outside the plug-hole sealing surface (the top end surface of the plug-hole wall 42). In other words, the distance *a* from the center of the air intake bolt-holes 46b to the center of the foregoing plug hole 42a, is set to be the same as the distance *b* from the center of the bolt holes 47b nearest the cylinder axis of the foregoing exhaust camshaft bearings 47 to the center of the plug hole 47b.

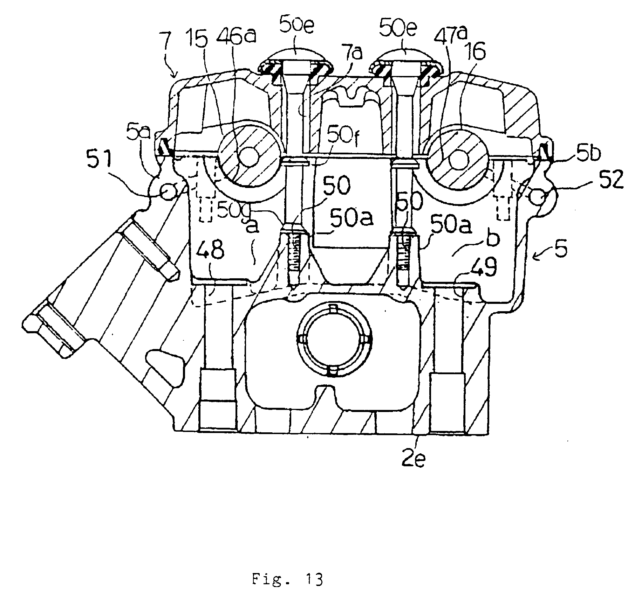

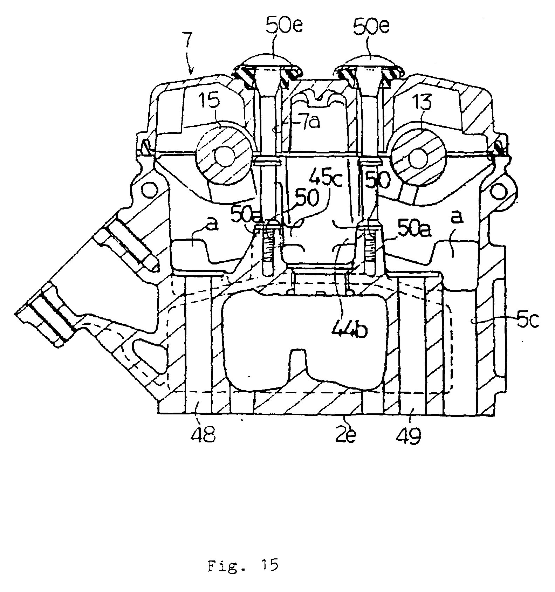

The areas 45a' on the side nearest the cylinder axis of the lifter guide walls 45a in each unit of each of the foregoing cylinders include a boss area 50a with a bolt hole 50 through which bolts 50e fasten the foregoing head cover 7 to said cylinder head 5. As shown in Figures 13 and 15, the foregoing boss areas 50a project upward from the bottom wall in the above mentioned spaces *a*, *b*. In addition, the foregoing boss areas 50a are one unit with a reinforcing rib 50c which is formed in the air intake lifter guide wall 45a on the side nearest the cylinder axis 45a for the adjacent above-described units. The exhaust side lifter guide wall 44 is also joined integrally by a rib 50d on the cylinder axis side.

Here, two upper and lower boss areas 50f, 50g are present to accommodate the foregoing bolts 50e. The bolts pass through the lower boss and thread into the upper boss to hold the two together. The upper boss area 50f functions as a positioning guide for the head cover 7, which is registered by the bolt 50e fitting into insertion hole 7a of the cover 7. In other words, the bottom of bolt 50e can be easily aligned with the bolt hole 50 by sliding the boss area 50f into the insertion hole 7a.

Oil passages 51, 52 are present in the inner wall 5a and the outer wall 5b of the foregoing cylinder head in the axial direction of the camshaft. Said oil passages 51, 52 are connected to an oil pump (not shown) by oil passages 53a-53c. Branch passages 51a, 52a connect to the foregoing bearing surfaces 46a, 47a from said oil passages 51, 52. Both of said branch passages 51a, 52a pass through the bolt holes 46b and 478b for the cam bearings on the outside of the cylinders, thereby allowing said bolt holes 46b, 47b to additionally serve as a part of the oil passages. 5c represents oil holes through which lubricating oil for the foregoing camshafts drains down into the crankcase.

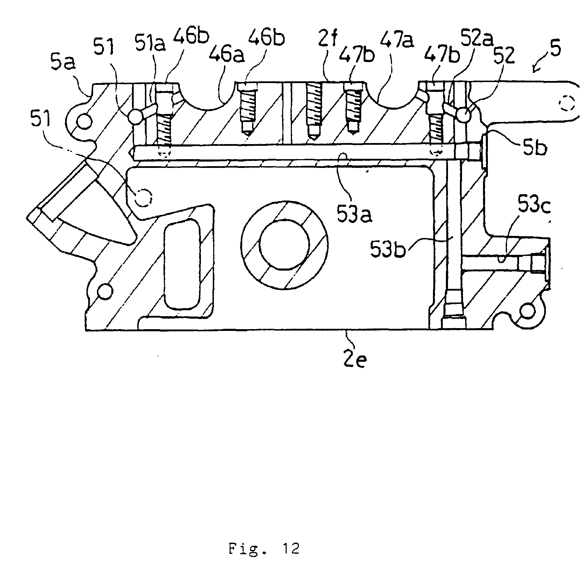

In this case, a configuration was used wherein the foregoing branch passages 51a, 52a pass through the bolt holes 46b, 47b, however, the foregoing oil passages 51, 52 do not necessarily have to pass through these holes. Alternatively, they can be routed below as shown by the double dot line in Figure 12. However, since the air intake passage 18 and exhaust passage 16 lie below the foregoing oil passages 51, 52, it is more difficult to position the foregoing oil passages 51, 52 in the lower position.

Next, the operational effects of this embodiment will be described.

When the engine is operating in the low speed range, for example under 2600 rpm, the diaphragm valve causes the ON-OFF tumble valve 23 to be in its tumble-generating position. In other words, it is rotated to the closed position (the position shown in Figure 2) whereby the air intake passage 18 is open only on the ceiling side. As a result, air entering the surge tank is introduced into the air intake ports 18 after passing through each of the cylinder extension pipes 25 and the air intake pipes 21b, where it flows along the ceiling 18b of said air intake port and is introduced into the cylinder near its axis to generate a tumbling action.

The air which is introduced into the surge tank 22 by means of the air introduction opening 22d flows through the above described spaces C and D, and, despite a plurality of extension pipes 25 inside the surge tank, little flow resistance is presented in the axial crankshaft direction. Thus, the rate of air intake to the engine as governed by the variable aperture of the throttle valve 30 occurs without lag, thereby assuring engine responsiveness.

When the engine speed is increased, for example, to levels above 2600 rpm, the ON-OFF tumble valve fully opens, that is, it is rotated to its non-tumble position; this action opens the constriction that caused the tumbling action to be generated and allows a higher air intake rate.

On one hand, looking at the air flow through the space A in the V-bank, the external air flows in the crank axial direction through the space defined by the bottom surface of the surge tank, the side surface, and the surfaces constituting the V-bank of cylinder block 2. Additionally, according to one of the characteristics of this embodiment, the outside air is flowing through the passage B, thereby enhancing the so-called ventilation effect. Thus hot air does not build up within the V-bank, but instead is expelled to the outside, thereby inhibiting heating the intake air. As a result the cylinder filling efficiency and the engine output are improved.

Additionally, the lid 22b of the surge tank 22 is used to unitize the air intake blocks 21, 21 of the left and right cylinders, effectively implementing a single air intake block for all cylinders, thereby improving the ease of engine assembly without increasing the number of parts or making the casting molds more complex. Incidentally, if this unitization were performed in a single casting, the mold would have to be quite complex, or if connecting means were used to join the two, the number of parts would have to be increased.

In this embodiment, the air intake passage is divided into air intake pipes 21b and extension pipes 25, and is additionally connected to the lid 22b, so that, when looking at the passages as a whole, more design freedom in placing the bends in the passages is achieved. Furthermore, when the foregoing air intake pipes 21b and extension pipes 25 are made into one unit by means of casting, the casting process poses some restrictions that limit the above described design freedom.

In this embodiment, the sides 45a' nearest the cylinder axis of the lifter guide walls 45a on both sides in the camshaft axial direction are connected to the plug-hole wall 42 by means of the cam bearing surfaces 46 and the reinforcing rib 45c. Additionally, the exhaust side lifter guide wall 44 is connected to the foregoing plug-hole wall 42 by means of the reinforcing rib 50d on the side 44' nearest the cylinder axis. Therefore, even when the valve pitch angle is small and the cylinder head height is large, the rigidity of the above mentioned air intake side lifter guide wall 45a and that of the exhaust side lifter guide wall 44 are enhanced by the plug-hole wall 42, thereby inhibiting noise otherwise caused by low rigidity of the lifter guide walls. Also, since the camshaft 46 is positioned between the lifter guide walls 45a and 45b, the camshaft is free to rotate smoothly.

Because the adjacent units of air intake lifter guide walls 45a and exhaust side lifter guide walls 44 are connected to the head cover by the bolt bosses 50a, and because they are connected by reinforcing ribs 50c and 50d, the rigidity of the lifter guide wall areas 45a, 44 is even further improved. In this case, because the foregoing lifter guide walls 45a and 44 were originally attached to the head cover by bolts through the bosses 50a, the connection among the foregoing lifter guide walls is easily performed.

Because the centers of the cylinder axis side bolt holes of the foregoing air intake side cam shaft bearing, and the centers of the bolt holes 47a of the cylinder axis side of the exhaust side camshaft bearings 47 are located on a circle concentric to the plug holes and in close proximity to the outside of the plug-hole sealing surfaces, this design is very compact yet while providing an adequate sealing surface for the plug hole.

Again, by selecting the diameter of the center lifter guide hole 43b to be smaller than the lifter guide holes 43a on either side, it is possible to narrow the width of the cam nose 15b of said central cam, thereby allowing greater thickness of the lifter guide walls 45a of the adjacent unit, and further preluding, when viewed from the axial direction of the head bolt holes, the overlap of the adjacent cylinder's lifter guide walls 45a, 45a and the seat surface 48a for the air intake side head bolt holes 48. As a result any need for boring the seat surface 48 is eliminated, thereby improving the ease of fabrication, as well as facilitating the insertion of the head bolts and the assembly operations of the head bolts.

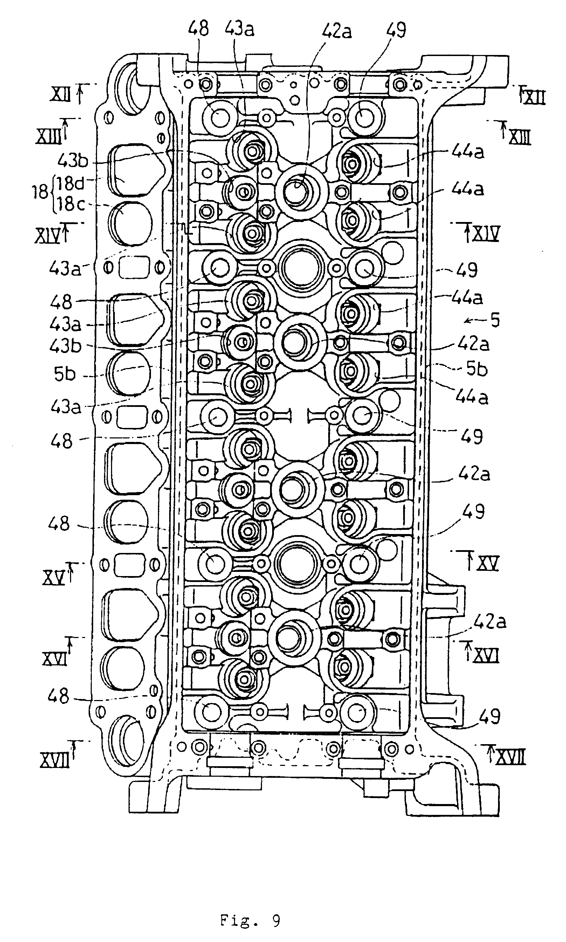

The foregoing embodiment as described uses a single air intake passage 18 common to the three air intake openings 11a-11c. However, as is shown in Figures 9, 10 and 18, this air intake passage 18 may be partitioned into an air intake passage 18d servicing the air intake openings 11a, 11b, and an air intake passage 18c servicing the air intake opening 11c. With that configuration, the above described ON-OFF tumble valve 23 could be linked with the air intake valve opening 11c to open and close the air intake passage 18c, or, the air intake valve opening 11b could be set up to facilitate the generation of tumbling as a so-called tumble port. With such a tumble port, the angle formed by the axial line of the foregoing air intake valve opening 11b and the cylinder axis would be set smaller than the angles formed between the air intake openings 11a, 11c and the cylinder axis, so that the air introduced into the cylinder would be introduced in the axial direction.

As described above, in the cylinder head of this engine the plug-hole wall is connected by means of a reinforcing rib to the lifter guide walls on both ends in the camshaft axial direction, so that even with narrow angle valve pitches and high cylinder head heights, rigidity is improved in the foregoing lifter guide walls due to the plug-hole wall, thereby having the effect of inhibiting the noise caused by low rigidity in the lifter guide walls.

In addition, in the described embodiment, the lifter guide holes are connected with the plug hole by means of a bearing surface and a reinforcing rib, and furthermore, the lifter guide walls of adjacent units are connected with the head cover by means of bolt-hole bosses, thereby even further increasing the rigidity of the lifter guide walls.

The described embodiment locates the cylinder side bolt holes for the air intake side and exhaust side cam bearings on a circle concentric to the plug hole, and also just outside the sealing surface for the plug hole, thereby securing the required sealing surface while making the foregoing units more compact and further allowing overall engine compactness.

Furthermore, the embodiment as described selects the diameter of the center lifter guide hole to be smaller than that of the lifter guide holes on either side, so that the dimensions of the lifter guide walls of the adjacent unit can be larger, and overlap can be avoided between the seat surface of the head bolt holes on the air intake side and the lifter guide wall. This design eliminates the need to bore the above seat surface, and improves ease of fabrication and efficiency in head bolt assembly.

## Claims

1. Internal combustion engine comprising a cylinder block (2) with at least one cylinder bore defined therein, a cylinder head (4,5) affixed to said cylinder block (2) through a plurality of head bolts and enclosing said cylinder bore, an intake passage arrangement (18) and an exhaust passage arrangement (16) including a plurality of exhaust valves (12) and a plurality of intake valves (14a,14b), said intake valves (14a,14b) and exhaust valves (12) being actuated by an intake camshaft (15) and exhaust camshaft (13) via valve lifters (13a,15a,15b) which are slidably received in lifter guide holes (43a,43b,44a) formed in lifter guide walls (45a,45b,44), and a spark plug hole wall (42) defining a spark plug hole (42a) for inserting a spark plug (41) therein, formed in said cylinder head (4,5), whereby the lifter guide walls (45a,45b,44) are integrally connected to the spark plug hole wall (42) and to the side wall (5a,5b) of the cylinder head, **characterized in that** the lifter guide walls (45a,45b,44) are connected to the spark plug hole wall (42) via a laterally extending reinforcing rib (45c,44b) and to the side wall (5a,5b) via a vertically extending reinforcing rib.

2. Internal combustion engine according to claim 1, **characterised in that** the intake valves comprise a center intake valve (14b) and two side intake valves (14c) per cylinder with a center lifter guide wall (45b) and two side lifter guide walls (45a) associated therewith, wherein the two side lifter guide walls (45a) are provided with the reinforcing ribs.

3. Internal combustion engine according to claim 1, **characterised in that** the center lifter guide wall (45b) forms the integral unit with the spark plug hole wall (42) over its entire length and that the side lifter guide walls (45a) are integrally connected to the spark plug hole wall (42) via said reinforcing ribs (45c).

4. Internal combustion engine according to claim 2 or 3, **characterised in that** camshaft bearings (46) having bearing surfaces for rotatably supporting respective bearing surfaces of the intake camshaft (15) are formed in the cylinder head (4, 5) between the center lifter guide wall (45b) and the side lifter guide walls (45a), said camshaft bearing (46) connecting the lifter guide walls (45a, 45b) with the spark plug hole wall (42).

5. Internal combustion engine according to at least one of claims 1 to 4, **characterised in that** the exhaust lifter guide walls (44) associated with the exhaust valves (12) are integrally connected with said side wall (5b) of the cylinder head (4, 5) and via said reinforcing ribs (44b) with the spark plug hole wall (42).

6. Internal combustion engine according to at least one of claims 1 to 5, **characterised in that** a camshaft bearing (47) having a bearing surface for rotatably supporting a respective bearing surface of the exhaust camshaft (13) is formed in the cylinder head (4, 5) between the exhaust lifter guide walls (44), said camshaft bearing (47) connecting the lifter guide walls (44) with the spark plug hole wall (42).

7. Internal combustion engine according to at least one of claims 1 to 6, **characterised in that** the camshaft bearings (46, 47) for the intake camshaft (15) and the exhaust camshaft (13) are provided with bolt holes (46b, 47b) for attaching bearing caps for holding the camshafts (15, 13) in place, wherein the bolt holes (46b, 46b) disposed inwardly of the intake and exhaust camshafts (15, 13) are located substantially on a circle line concentric with the spark plug hole (42a) near the outside of the spark plug hole wall (42).

8. Internal combustion engine according to at least one of claims 1 to 7, **characterised in that** the cylinder head (4, 5) is affixed to the cylinder block (2) through at least four head bolts per cylinder, said head bolts defining a rectangular area within which the lifter guide walls (45a, 45b, 44) and the spark plug hole wall (42) are disposed.

9. Internal combustion engine according to at least one of claims 1 to 8, **characterised in that** a plurality of cylinders are arranged in line and lifter guide walls (45a, 44) of adjacent cylinders facing each other are integrally connected with each other through a boss portion (48a) formed in the cylinder head (4,5) for receiving the head bolts.

10. Internal combustion engine according to at least one of claims 1 to 9, **characterised in that** the lifter guide walls (44, 43a) of adjacent cylinders facing each other are integrally connected with each other through reinforcing ribs (50c, 50d).

11. Internal combustion engine according to claim 10, **characterised in that** the reinforcing ribs (50c, 50d) connecting adjacent lifter guide walls (45a, 44) of the side intake valves (14a) and/or the exhaust valves (12), respectively, are each integrally provided with a boss portion (50a) for receiving cover bolts (50e) for fastening a head cover (6, 7) to the cylinder head (4, 5).

12. Internal combustion engine according to at least one of claims 2 to 11, **characterised in that** the lifter guide hole (45b) for the center intake valve (14b) has a smaller diameter than the lifter guide hole (45a) for the side intake valve (14a).

13. Internal combustion engine according to at least one of claims 1 to 12, **characterised in that** the spark plug (41) is disposed inclined with respect to the cylinder axis (H), preferably towards one of the intake or exhaust side walls (5a, 5b) of the cylinder head (4, 5).

## Patentansprüche

1. Verbrennungskraftmaschine mit einem Zylinderblock (2) mit zumindest einer darin definierten Zylinderbohrung, einem Zylinderkopf (4,5), der an dem Zylinderblock (2) mit einer Vielzahl von Kopfbolzen angebracht ist und die Zylinderbohrung schließt, einer Einlaßkanalanordnung (18) und einer Auslaßkanalanordnung (16) mit einer Vielzahl von Auslaßventilen (12) und einer Vielzahl von Einlaßventilen (14a,14b), wobei die Einlaßventile (14a,14b) und die Auslaßventile (12) durch eine Einlaßnockenwelle (15) und eine Auslaßnockenwelle (13) über Ventilheber (13a,15a,15b) betätigt werden, welche gleitbeweglich in Heberführungsöffnungen (43a,43b,44a), die in Heberführungswänden (45,45b,44) ausgebildet sind, aufgenommen sind, und eine Zündkerzenöffnungswand (42) mit einer Zündkerzenöffnung (42a) zum Einsetzen einer Zündkerze (41) in dieselbe, die in dem Zylinderkopf (4,5) ausgebildet ist, wodurch die Heberführungswände (45a, 45b,44) integral mit der Zündkerzenöffnungswand (42) und den Zylinderkopfseitenwänden (5a,5b) verbunden sind, **dadurch gekennzeichnet,** daß die Heberführungswände (45a,45b,44) mit der Zündkerzenöffnungswand (42) über eine sich seitlich erstreckende Verstärkungsrippe (45c,44b) und mit der Seitenwand (5a,5b) über eine sich vertikal erstreckende Verstärkungsrippe verbunden sind.

2. Verbrennungskraftmaschine nach Anspruch 1, **dadurch gekennzeichnet,** daß die Einlaßventile ein mittleres Einlaßventil (14b) und zwei Seiteneinlaßventile (14c) je Zylinder aufweisen, denen eine mittlere Heberführungswand (45b) und zwei seitliche Heberführungswände (45a) zugeordnet sind, wobei die beiden seitlichen Heberführungswände (45a) mit den Verstärkungsrippen versehen sind.

3. Verbrennungskraftmaschine nach Anspruch 1, **dadurch gekennzeichnet,** daß die mittlere Heberführungswand (45b) die Integraleinheit mit der Zündkerzenöffnungswand (42) über ihre gesamte Länge bildet und daß die seitlichen Heberführungswände (45a) integral mit der Zündkerzenöffnungswand (42) über die Verstärkungsrippen (45c) verbunden sind.

4. Verbrennungskraftmaschine nach Anspruch 2 oder 3, **dadurch gekennzeichnet,** daß Nockenwellenlager (46), die Lagerflächen zur drehbaren Lagerung der jeweiligen Lagerflächen an der Einlaßnockenwelle (15) in dem Zylinderkopf (4,5) aufweisen, zwischen der mittleren Heberführungswand (45b) und den seitlichen Heberführungswänden (45a) ausgebildet sind, wobei das Nockenwellenlager (46) die Heberführungswände (45a,45b) mit der Zündkerzenöffnungswand (42) verbindet.

5. Verbrennungskraftmaschine nach zumindest einem der Ansprüche 1 bis 4, **dadurch gekennzeichnet,** daß die Auslaßheberführungswände (44), die den Auslaßventilen (12) zugeordnet sind, integral mit der Seitenwand (5b) des Zylinderkopfes (4,5) verbunden sind und über die Verstärkungsrippen (44b) mit der Zündkerzenöffnungswand (42).

6. Verbrennungskraftmaschine nach zumindest einem der Ansprüche 1 bis 5, **dadurch gekennzeichnet,** daß ein Nockenwellenlager (47), das eine Lagerfläche zur drehbaren Lagerung einer entsprechenden Lagerfläche an der Auslaßnockenwelle (13) aufweist, in dem Zylinderkopf (4,5) zwischen den Auslaßheberführungswänden (44) ausgebildet ist, wobei das Nockenwellenlager (47) die Heberführungswände (44) mit der Zündkerzenöffnungswand (42) verbindet.

7. Verbrennungskraftmaschine nach zumindest einem der Ansprüche 1 bis 6, **dadurch gekennzeichnet,** daß die Nockenwellenlager (46,47) für die Einlaßnockenwelle (15) und die Auslaßnockenwelle (13) mit Bolzenöffnungen (46b,47b) zur Befestigung von Lagerkappen zum Halten der Nockenwellen (15,13) an ihrem Ort vorgesehen sind, wobei die Bolzenöffnungen (46b,47b), die innenseitig der Einlaß- und Auslaßnockenwellen (15,13) angeordnet sind, im wesentlichen auf einer Kreislinie liegen, die konzentrisch zu der Zündkerzenöffnung (42a) in der Nähe der Außenseite der Zündkerzenöffnungswand (42) angeordnet sind.

8. Verbrennungskraftmaschine nach zumindest einem der Ansprüche 1 bis 7, **dadurch gekennzeichnet,** daß der Zylinderkopf (4,5) an dem Zylinderblock (2) durch zumindest vier Kopfbolzen je Zylinder befestigt ist, wobei die Kopfbolzen einen rechteckigen Bereich definieren, in dem die Heberführungswände (45a,45b,44) und die Zündkerzenöffnungswand (42) vorgesehen sind.

9. Verbrennungskraftmaschine nach zumindest einem der Ansprüche 1 bis 8, **dadurch gekennzeichnet,** daß eine Vielzahl von Zylindern in Reihe angeordnet ist und die Heberführungswände (45a,44) von benachbarten Zylindern, die zueinander weisen, integral miteinander durch einen vorstehenden Abschnitt (48a) verbunden sind, der in dem Zylinderkopf (4,5) zur Aufnahme der Kopfbolzen ausgebildet ist.

10. Verbrennungskraftmaschine nach zumindest einem der Ansprüche 1 bis 9, **dadurch gekennzeichnet,** daß die Heberführungswände (44,43a) von benachbarten Zylindern, die zueinander weisen, integral miteinander durch Verstärkungsrippen (50c,50d) verbunden sind.

11. Verbrennungskraftmaschine nach Anspruch 10, **dadurch gekennzeichnet,** daß die Verstärkungsrippen (50c,50d) jeweils benachbarte Heberführungswände (45a,44) der seitlichen Einlaßventile (14a) und/oder der Auslaßventile (12) verbinden, jeweils integral mit einem vorspringenden Abschnitt (50a) versehen sind zur Aufnahme von Abdekkungsbolzen (50e) zur Befestigung einer Kopfabdeckung (6,7) an dem Zylinderkopf (4,5).

12. Verbrennungskraftmaschine nach zumindest einem der Ansprüche 2 bis 11, **dadurch gekennzeichnet,** daß die Heberführungsöffnung (45b) des mittleren Einlaßventils (14b) einen kleineren Durchmesser aufweist als die Heberführungsöffnung (45a) des seitlichen Einlaßventils (14a).

13. Verbrennungskraftmaschine nach zumindest einem der Ansprüche 1 bis 12, **dadurch gekennzeichnet,** daß die Zündkerze (41) geneigt zu der Zylinderachse (H) angeordnet ist, vorzugsweise in Richtung einer der Einlaß- oder Auslaßseitenwände (5a,5b) des Zylinderkopfes (4,5).

## Revendications

1. Moteur à combustion interne comprenant un bloc-cylindres (2) avec au moins un alésage cylindrique défini en son sein, une culasse (4, 5) fixée audit bloc-cylindres (2) via une pluralité de boulons à tête et renfermant ledit alésage cylindrique, un agencement de passage d'admission (18) et un agencement de passage d'échappement (16) comprenant une pluralité de soupapes d'échappement (12) et une pluralité de soupapes d'admission (14a, 14b), lesdites soupapes d'admission (14a, 14b) et soupapes d'échappement (12) étant actionnées par un arbre à cames d'admission (15) et un arbre à cames d'échappement (13) via des lève-soupapes (13a, 15a, 15b) qui sont logés à coulissement dans des trous de guidage d'organe de levée (43a, 43b, 44a) formés dans des parois de guidage d'organe de levée (45a, 45b, 44), et une paroi à trou de bougies d'allumage (42) définissant un trou de bougie d'allumage (42a), permettant l'insertion en son sein d'une bougie d'allumage (41), formée dans ladite culasse (4, 5) de manière que les parois de guidage d'organe de levée (45a, 45b, 44) soient reliées d'un seul tenant à la paroi à trou de bougie d'allumage (42), et à la paroi latérale (5a, 5b) de la culasse, caractérisé en ce que les parois de guidage d'organe de levée (45a, 45b, 44) sont reliées à la paroi à trou de bougie d'allumage (42), via une nervure de renforcement (45c, 44b) s'étendant latéralement, et à la paroi latérale (5a, 5b), via une nervure de renforcement s'étendant verticalement.

2. Moteur à combustion interne selon la revendication 1, caractérisé en ce que les soupapes d'admission comprennent une soupape d'admission centrale (14b) et deux soupapes d'admission latérales (14c) par cylindre, une paroi de guidage d'organe de levée centrale (45b) et deux parois de guidage d'organe de levée latérales (45a) y étant associées, dans lequel les deux parois de guidage d'organe de levée (45a) latérales sont pourvues des nervures de renforcement.

3. Moteur à combustion interne selon la revendication 1, caractérisé en ce que la paroi de guidage d'organe de levée centrale (45b) forme l'unité monobloc avec la paroi à trou de bougie d'allumage (42) sur toute sa longueur et en ce que les parois de guidage d'organe de levée (45a) latérale sont reliées d'un seul tenant à la paroi à trou de bougies d'allumage (42) via lesdites nervures de renforcement (45c).

4. Moteur à combustion interne selon la revendication 2 ou 3, caractérisé en ce que des paliers d'arbre à cames (46), ayant des surfaces porteuses destinées à supporter à rotation des surfaces porteuses respectives de l'arbre à cames d'admission (15), sont formés dans la culasse (4, 5) entre la paroi de guidage d'organe de levée centrale (45b) et les parois de guidage d'organe de levée latérale (45a), ledit palier d'arbre à cames (46) reliant les parois de guidage d'organe de levée (45a, 45b) à la paroi à trou de bougie d'allumage (42).

5. Moteur à combustion interne selon au moins l'une des revendications 1 à 4, caractérisé en ce que les parois de guidage d'organe de levée d'échappement (44) associées aux soupapes d'échappement (12) sont reliées d'un seul tenant à ladite paroi latérale (5b) de la culasse (4, 5) et, via lesdites nervures de renforcement (44b), à la paroi à trou de bougies d'allumage (42).

6. Moteur à combustion interne selon au moins l'une des revendications 1 à 5, caractérisé en ce qu'un palier d'arbre à cames (47), ayant une surface porteuse permettant de supporter à rotation une surface porteuse respective de l'arbre à cames d'échappement (13), est formé dans la culasse (4, 5) entre les parois de guidage d'organe de levée d'échappement (44), ledit palier d'arbre à cames (47) reliant les parois de guidage d'organe de levée (44) à la paroi à trou de bougie d'allumage (42).

7. Moteur à combustion interne selon au moins l'une des revendications 1 à 6, caractérisé en ce que les paliers d'arbre à cames (46, 47) prévus pour l'arbre à cames d'admission (15) et l'arbre à cames d'échappement (13) sont pourvus de trous de boulon (46b, 47b) pour fixer des capuchons de palier permettant de maintenir en place les arbres à cames (15, 13), dans lequel les trous de boulon (46b, 47b) disposés vers l'intérieur des arbres à cames d'admission et d'échappement (15, 13) sont placés sensiblement sur une ligne de cercle concentrique avec le trou de bougie d'allumage (42a) près de l'extérieur de la paroi à trou de bougie d'allumage (42).

8. Moteur à combustion interne selon au moins l'une des revendications 1 à 7, caractérisé en ce que la culasse (4, 5) est fixée au bloc-cylindres (2) via au moins quatre boulons à tête par cylindre, lesdits boulons à tête définissant une zone rectangulaire dans laquelle sont disposées les parois de guidage d'organe de levée (45a, 45b, 44) et la paroi à trou de bougie d'allumage (42).

9. Moteur à combustion interne selon au moins l'une des revendications 1 à 8, caractérisé en ce qu'une pluralité de cylindres est agencée en ligne et les parois de guidage d'organe de levée (45a, 44) de cylindres adjacents, tournées les unes vers les autres sont reliées d'un seul tenant entre elles, via une partie de bossage (48a) formée dans la culasse (4, 5) pour loger les boulons à tête.

10. Moteur à combustion interne selon au moins l'une des revendications 1 à 9, caractérisé en ce que les parois de guidage d'organe de levée (44, 43a) de cylindres adjacents tournées les unes vers les autres sont reliées d'un seul tenant entre elles via des nervures de renforcement (50c, 50d).

11. Moteur à combustion interne selon la revendication 10, caractérisé en ce que les nervures de renforcement (50c, 50d) reliant des parois de guidage d'organe de levée (45a, 44) adjacentes des soupapes d'admission latérales (14a) et/ou des soupapes d'échappement (12), respectivement, sont chacune pourvues d'une partie de bossage (50a) devant recevoir des boulons de couvercle (50e) pour fixer un couvercle de tête (6, 7) à la culasse (4, 5).

12. Moteur à combustion interne selon au moins l'une des revendications 2 à 11, caractérisé en ce que le- trou de guidage d'organe de levée (45b) pour la soupape d'admission centrale (14b) présente un diamètre inférieur au trou de guidage d'organe de levée (45a) pour la soupape d'admission latérale (14a).

13. Moteur à combustion interne selon au moins l'une des revendications 1 à 12, caractérisé en ce que la bougie d'allumage (41) est disposée inclinée par rapport à l'axe de cylindre (H), de préférence vers l'une des parois latérales d'admission ou d'échappement (5a, 5b) de la culasse (4, 5).
